# EUROPEAN PATENT SPECIFICATION

(11) **EP 3 653 308 B1**
(45) Date of publication and mention of the grant of the patent: **26.06.2024**
(21) Application number: 19206091.1
(22) Date of filing: 30.10.2019
(51) Int. Cl.: B05C 11/10, B29B 13/02

(54) **FUSING DEVICE AND METHOD FOR USING SAID FUSING DEVICE**
SCHMELZFIXIERVORRICHTUNG UND VERFAHREN ZUR VERWENDUNG DIESER SCHMELZFIXIERVORRICHTUNG
DISPOSITIF DE FUSION ET PROCEDE D'UTILISATION DUDIT DISPOSITIF DE FUSION

(30) Priority: 15.11.2018 IT 201800010342
(43) Date of publication of application: 20.05.2020
(73) Proprietor: Zanin Nello S.r.l., 31058 Susegana (TV) (IT)
(72) Inventor: ZANIN, Simone, 31058 SUSEGANA (TV) (IT)
(74) Representative: Burchielli, Riccardo

(56) References cited:
- EP-A1- 1 967 282
- EP-A2- 2 332 708
- WO-A2-2006/092034
- DE-A1- 3 815 089
- US-B2- 10 099 242

## Description

### Technical field

This invention relates to a fusing device which can be used for melting polymeric resins and, for example, melting glues supplied solid by the manufacturers.

The fusing device is particularly suitable for making, for example, glue spreaders for edging machines for gluing finishing edges to wooden panels.

### Background art

Glue spreading machines are currently known which, by means of a rotary roller, deposit a film of glue on the side surface of an edge of a panel made, for example of wood, for gluing a finishing edge to it.

An example of a similar spreader is described, for example, in Italian patent document IT102017000138025.

The current glue spreading machines for edging machines are equipped with an applicator which melts the glue - for example polyurethane or ethylene-vinyl acetate (EVA) glue which is originally supplied in the form of granules or blocks.

The granules have an average grain size of approximately 2-3 millimetres, whilst the blocks can have the shape of cylinders with a diameter of approximately 65 millimetres and a height of approximately 70 millimetres.

The author of the invention has noted that it is relatively difficult and laborious to clean the remains of glue from inside the applicators of the current edging machines, for example due to the relatively complicated shape of the heating grilles which melt the glue and the complex and rich shape of the undercut of the conduits full of molten glue and then solidified again, which results in various drawbacks:
- loss of time during the processing changes which require different glues caused by the long and complicated operations for cleaning the applicator;
- waste of abundant remnants of glue remaining in the applicator; these remnants are in fact all the re-solidified glue which fills all the inner conduit downstream of the point in which the granule or block starts to melt and the outlet opening of the applicator;
- consumption of suitable cleaning substances in granules or blocks which must be loaded and passed inside the applicator before filling it with a different type of glue; since it is not possible, or it is difficult, to clean the known cleaners by hand and with mechanical methods, they can be cleaned with suitable "cleaning" substances consisting of granules or blocks which must be loaded and melted in the applicator like the glues.

More specifically, a block of glue currently costs approximately 8 Euros.

In order to clean a block of glue from an applicator of which only half is used it is necessary to insert and melt a block of cleaning substance, which costs approximately three euros; however, after this cleaning, before being operational again, the applicator must be loaded with a new block of glue to clean the remnants of cleaning substance, with a total cost of approximately 11 Euros at every processing change.

The frequency of these drawbacks, especially the extra costs of the cleaning substances, is clearly greater the more frequent are the processing changes with the change to a different type of glue.

The relevant prior art comprises patent documents EP2332708A2 and EP1967282A1.

The relevant prior art also comprises patent documents US10099242B2, WO2006/092034A2 and DE3815089A1.

An aim of the invention is to provide a fusing device which is easier and quicker to clean with manual or mechanical methods, compared with the known glue applicators.

### Summary of the invention

This aim is achieved, according to a first aspect of the invention, with a fusing device having the characteristics according to claim 1.

According to the invention, the melting duct (5) in the fusing device extends along a central longitudinal axis (ACF) which is substantially rectilinear.

According to a particular embodiment of the invention, the fusing device is designed to dispense a flow of fluid synthetic resin when the melting cell (3) is mounted and operating.

According to a second aspect of the invention, this aim is achieved with a method for using a fusing device having the characteristics according to claim 5.

The advantages which can be achieved with this invention are more apparent, to technicians in the sector, from the following detailed description of an example embodiment of a non-limiting nature, illustrated with reference to the following schematic figures.

### List of drawings

Figure 1 is a perspective view of the rear side of a fusing device according to a particular embodiment of the invention, with the cap closed;
Figure 2 is a perspective view of the front side of the fusing device of Figure 1;
Figure 3 is a first cross-section view, according to an ideal plane passing through the axis ACF and parallel to the plane XZ, of the fusing device of Figure 1;
Figure 3A shows a detail of the cross-section of Figure 3;
Figure 4 is a second cross-section view, according to an ideal plane passing through the axis ACF and parallel to the plane YZ, of the melting cell of the fusing device of Figure 1;
Figure 5 is a perspective view from below of the fusing device of Figure 1;
Figure 6 is an exploded perspective view of the upstream and intermediate casing pieces of the melting cell of the fusing device of Figure 1;
Figure 7 is an exploded perspective view of the downstream casing piece of the melting cell of the fusing device of Figure 1;
Figure 8 is a perspective view of the melting cell of the fusing device of Figure 1, partially disassembled and with the casing pieces open in a fan-like fashion.

### Detailed description

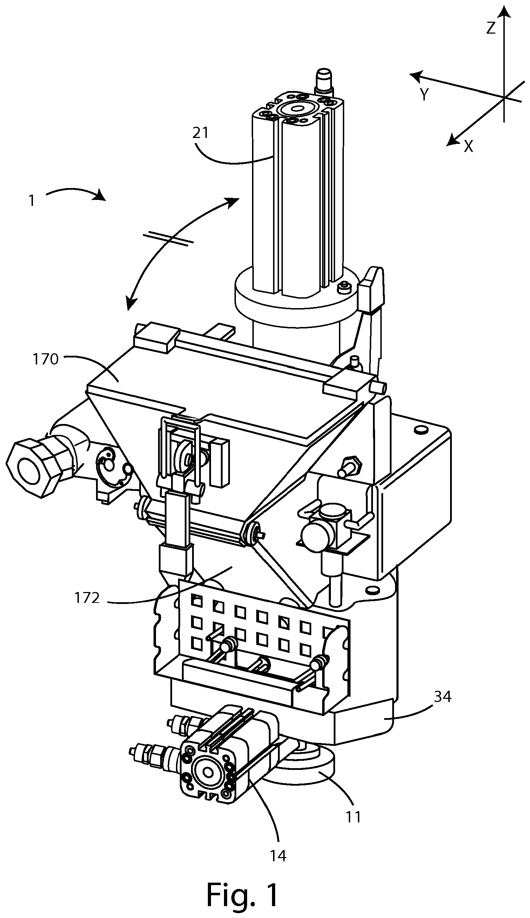

[1] Figures 1-8 are relative to a fusing device according to a particular embodiment of the invention, labelled as a whole with the numeral 1.

Unless otherwise specified, the expressions "upstream, downstream, from/to upstream, from/to downstream" used in this description refer to the direction of the flows of the glue or other material to be treated in the fusing device 1.

The device 1 comprises a melting cell 3 arranged for melting polymeric resins to be treated, such as for example glues, and in turn comprising a plurality of casing pieces 30, 32, 34 which together form a melting duct 5 along which a polymeric resin to be treated is melted, passing, for example from the solid state to the liquid state or a more or less creamy fluid and wherein each casing piece 30, 32, 34 forms a respective portion of the inner walls of the melting duct 5 and can be reversibly fixed to and separated from the other casing pieces 32, 34, 30.

The melting cell 3 is designed to melt polymeric resins at a temperature of, for example, between 80°-260° C.

As shown in the embodiment in the accompanying drawings, at least one of the casing pieces 30, 32, 34 forms the complete inner wall of a portion 50, 52, 54 of the melting duct.

During the normal operation of the melting device 1 the inner walls of the melting duct 5 are preferably substantially fixed to each other and with respect to the rest of the fusing device 1.

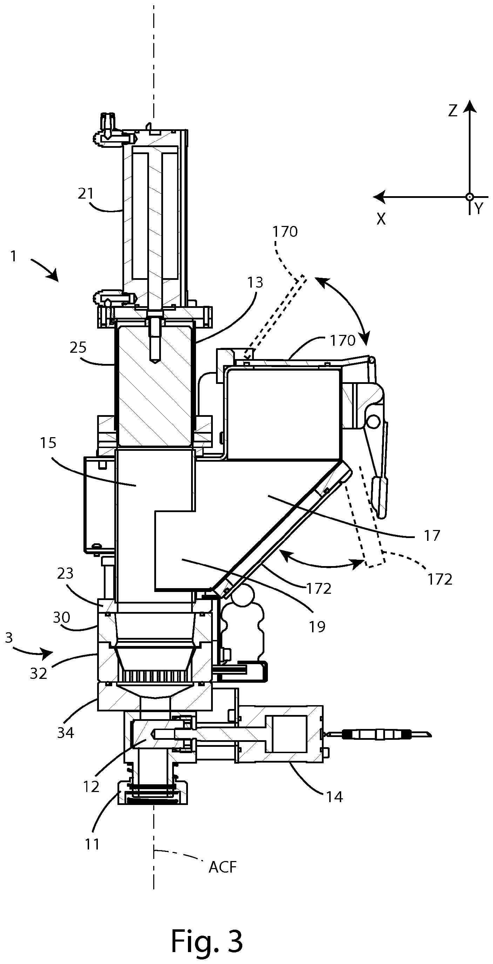

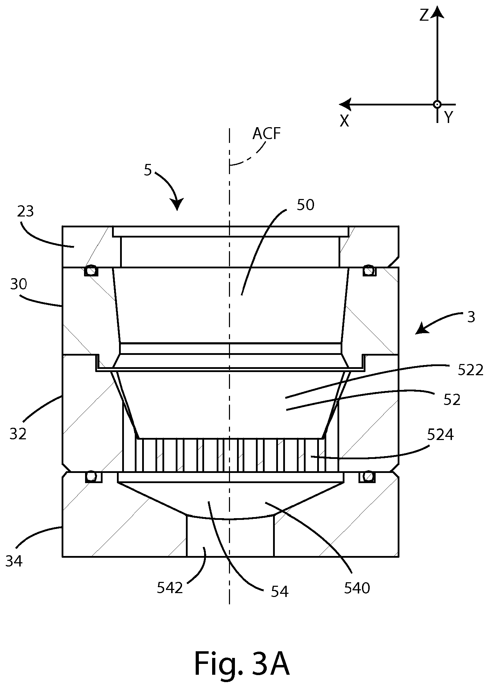

As shown in the embodiment in Figures 3, 3A the three casing pieces 30, 32, 34 each form the complete inner wall of a respective portion 50, 52, 54, such that the inner walls of each casing piece form complete transversal sections of the respective portion 50, 52, 54 of the melting duct 5.

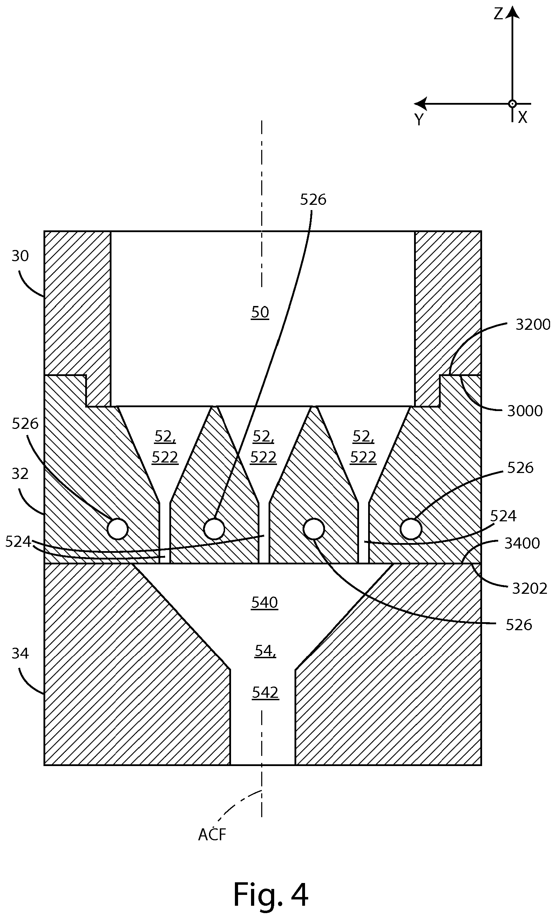

For this purpose, at least two of the casing pieces 32, 34 can be delimited by respective coupling surfaces 3000, 3200, 3202, 3400 at which the at least two casing pieces 32, 34 couple with each other when the melting cell 3 is mounted, and the coupling surfaces 3000, 3200, 3202, 3400 intersect the melting duct 5 perpendicularly and/or transversely to the axis of the melting duct (5) (Figures 4, 6, 7).

According to other embodiments not illustrated, the inner walls of each casing piece 30, 32, 34 can form only part of the transversal sections of a portion of the melting duct 5, and form, for example, segments of the duct 5.

For this purpose, at least two of the casing pieces 32, 34 are delimited by respective coupling surfaces at which the at least two casing pieces 32, 34 couple with each other when the melting cell 3 is mounted, and the coupling surfaces intersect the melting duct 5 parallel and/or longitudinally to the axis of the melting duct (5).

As shown in the embodiment in the accompanying drawings, the melting cell 3 can comprise an upstream casing piece 30, an intermediate casing piece 32 and a downstream casing piece 34, advantageously packed and pressed together by means of screws or other threaded pins or tie rods 7, 9 (Figures 3A, 4, 5); this makes the melting cell 3 divisible, giving it a very good seal when it is mounted.

The screws or other threaded pins or tie rods 7, 9 can be, for example, fixed to the plate 23 fixed to the outlet of the first and second supply conduit described below.

Advantageously, the portion 52, 54 of the melting duct 5 formed by at least one of the casing pieces 30, 32, 34 forms any undercuts which are such by extracting the polymeric resin, which has melted and then re-solidified in the portion of the melting duct according to a single direction of flow of that portion of the melting duct.

As shown by way of example in the accompanying drawings, the fusing device 1 is equipped with a fastening system designed to allow the reversible disassembling and reassembling of the melting duct, by separating and joining together two or more of the casing pieces 30, 32, 34 rotating them about an axis of rotation ARB1 substantially parallel or longitudinal to the axis ACF of the portion of the melting duct 50, 52, 54 formed by said two or more casing pieces 30, 32, 34 which are separated or joined, and allowing the separation, cleaning and reassembly together of the two or more casing pieces 30, 32, 34 keeping them always fixed to each other and to the rest of the fusing device 1, as described in more detail below.

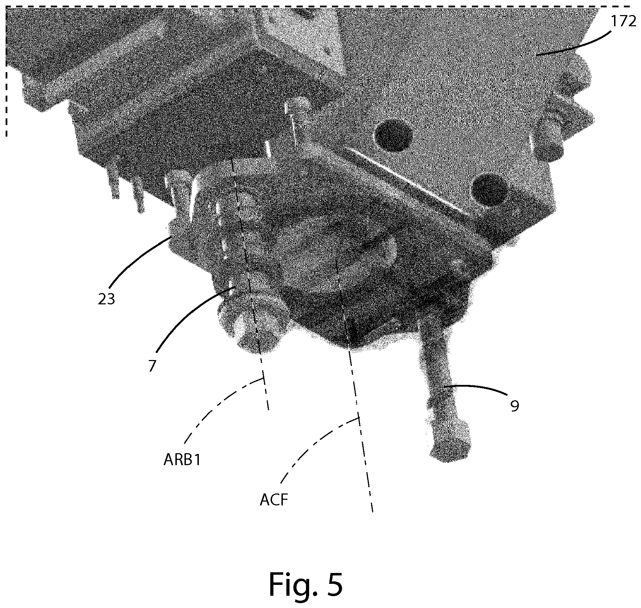

As shown in the embodiment of Figures 5-8, the fastening system can comprise one or more of the above-mentioned screws or other threaded pins 7, 9 inserted in corresponding through holes 320, 340 or slots 322, 342 made respectively in the intermediate 32 and downstream 34 casing pieces. The screws, other threaded pins or other tie rods 7, 9 are advantageously parallel or substantially longitudinal to the axis ACF of the melting duct 5.

According to other embodiments not illustrated, the fastening system is designed to allow the reversible disassembling and reassembling of the melting duct separating and re-joining together two or more casing pieces 30, 32, 34 making them perform the following movement, keeping them always fastened together and to the rest of the fusing device 1 during this movement:
- rotating the two or more of the casing pieces 30, 32, 34 about an axis of rotation substantially perpendicular or transversal to the axis ACF of the portion of the melting duct formed by said two or more casing pieces 30, 32, 34 which are separated or joined.

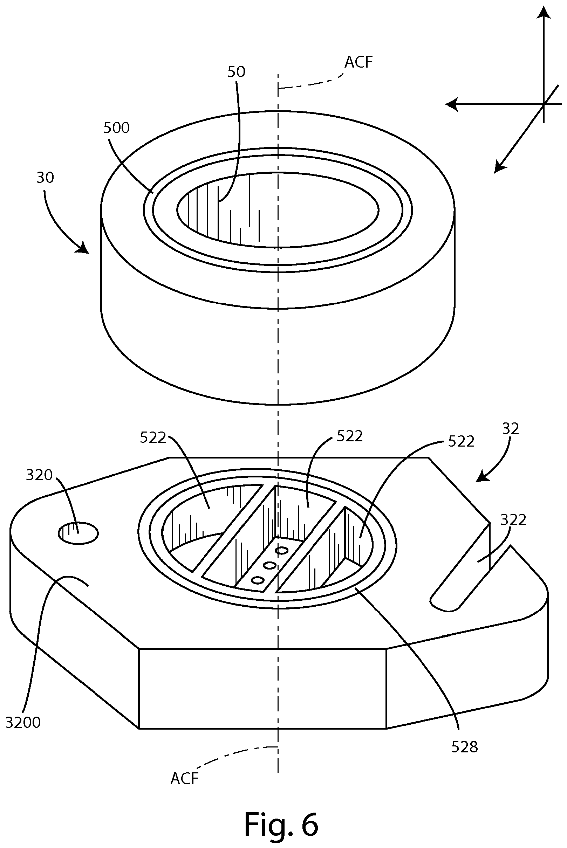

The upstream casing piece 30 can have substantially the overall shape of a cylindrical pipe open at both ends (Figure 6).

The upstream casing piece 30 is preferably made from Teflon (polytetrafluoroethylene, PTFE) or other material with a relatively low thermal conductivity, whilst the casing pieces 32, 34 more downstream are preferably made with materials with a thermal conductivity, such as, for example, aluminium or other metallic materials.

Thanks to its low thermal conductivity, during operation the upstream casing piece 30 remains much colder than the casing pieces 32, 34 contains much less molten glue with respect to the pieces 32, 34 and forms a thermal barrier which avoids an undesired propagation of the heat to the more upstream zones od the fusing device 1.

Since it is made of Teflon or other low friction material, the upstream casing piece 30 facilitates the introduction of glue in blocks.

Advantageously, the portion of the melting duct 50 also forms, close to the downstream end, a narrow section, widening downstream and upstream starting from the narrow section.

For this purpose, as shown in Figure 3A, the portion of melting duct 50 can form two tapered portions, one 5000 which widens in an downstream direction and the other 5002 which widens in an upstream direction, separated by an edge 5004 substantially with a sharp edge.

In combination with the reduced thermal conductivity of the material of the upstream casing piece 30, the sharp edge 5004 or more in general above-mentioned narrow section form a barrier which blocks the rising from downstream to upstream of the molten glue, for example because it promote the formation of an edge of glue which is solidified along the edge 5004.

According to other embodiments not illustrated, the portion 50 of the melting duct 5 formed by the upstream casing piece 30 can substantially have a cylindrical or truncated cone shape.

Advantageously, the upstream casing piece 30 is fixed to the rest of the fusing device 1 in such a way as to be easily and reversibly dismantled from and reassembled on the rest of the fusing device 1.

For this purpose, advantageously it can be simply inserted in suitable seats made in the casing piece 32 and in the plate 23, or coupled with them by means of suitable male/female couplings if necessary without joints or hooks, and can be clamped between the casing piece 32 and the plate 23. The clamping can be advantageously achieved by means of screws, threaded pins or tie rods 7, 9.

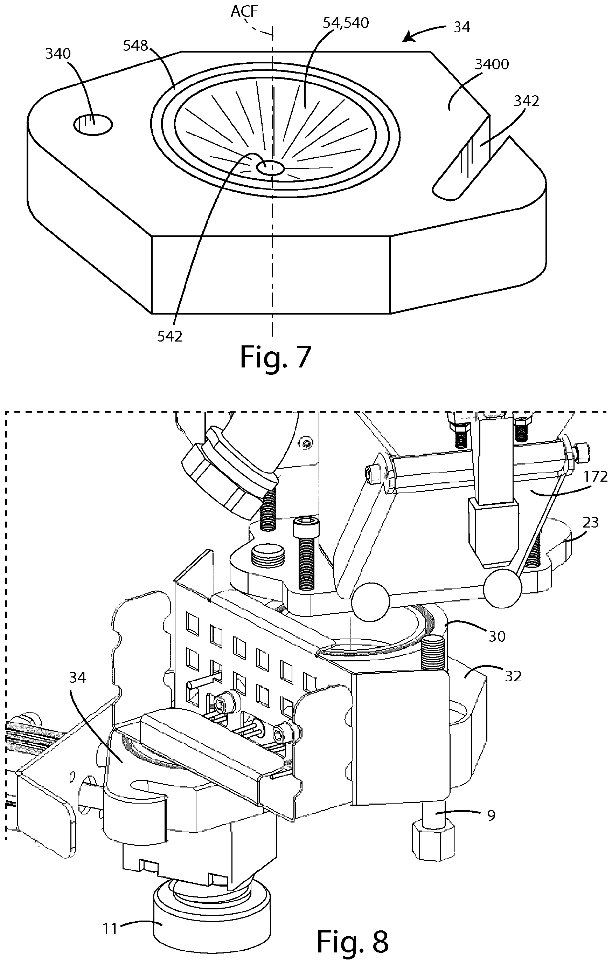

The intermediate casing piece 32 and the downstream casing piece 34 can substantially have the shape of a flat plate, preferably oblong and with ends more or less rounded or in the shape of a triangle (Figures 6, 7); as described in detail below, the oblong shape makes the cleaning of the pieces 32 easier, 34 keeping the open in a fan-like manner.

The portion 52 of the melting duct 5 formed by the intermediate casing piece 32 in its more upstream section substantially forms hopper-like portions 522, which progressively narrow from upstream to downstream (Figures 3A, 4, 6).

As shown in the embodiment of Figures 3A, 4, 6 the intermediate casing piece 32 forms hopper-like portions 522 alongside each other and which supply in parallel to each other the portion 54 further downstream of the melting duct 5.

Downstream of the hoper-like portions 522, the portion 52 of the melting duct 5 advantageously forms a plurality of through holes 524 - having, for example, a circular, square, oval, elliptical, polygonal or in case relatively squat transversal cross section - or in any case a plurality of ducts each having a through section very much smaller than the relative hopper-like portion 522.

The through holes 524 preferably have an average or maximum diameter of between 3-5 millimetres, in such a way as to not be passed through by granules of un-molten glue without causing excessive head losses in the flow of the molten glue.

As shown in the embodiment of the accompanying drawings, each hopper-like portion 522 can supply and be in fluid communication with a plurality of through holes or other smaller ducts 524 downstream; these smaller ducts 524 are preferably aligned in several rows, for example a row for each hopper-like portion 522.

At both sides of each row of smaller ducts 524 there are preferably two electrical thermal-resistors or other heater elements 526, which heat the melting cell 3 and melt the glue or other polymeric resin present in the melting duct 5.

As shown in the embodiment of Figures 3A, 4, 6 the upstream portion 540 of the melting duct 5, 54 of the downstream casing piece 34 advantageously has a conical or truncated cone shape.

The downstream portion 542 of the melting duct 5, 54 of the downstream casing piece 34 can have, for example, a substantially cylindrical shape with through sections smaller than the through sections of the portions more upstream of the portion 540 in such a way as to concentrate the flow of molten glue.

Advantageously, the portions 50, 52, 54 of the melting duct 5 can have a more or less tapered shape, to facilitate the extraction of the solidified glue with simple manual tools such as, for example, spatulas, chisels, screwdrivers, scrapers or other tools, preferably non-metallic, for example made of Bakelite so as no to ruin the material of the fusing device.

In particular, the hopper-like portions 522 and the conical or truncated cone portion 540 are clearly tapered.

Suitable grooves or other seats 500, 528, 548 which surround the downstream and/or upstream openings of the portions 50, 52, 54 of the melting duct 5, and in which are inserted in the respective O-rings or other seals, are advantageously made in the surfaces of the coupling between the various casing pieces 30, 32, 34 (Figures 6, 7).

The fusing device 1 can be equipped with dispensing nozzle 11 supplied from the melting duct 5 and for example from its portion 54 (Figure 1).

The dispensing nozzle 11 is designed to dispense the molten glue or other polymeric resin and supply it, for example, to an applicator roller of an edging machine, such as, for example, the roller 11 of the edging machine described in the above-mentioned Italian patent application IT102017000138025, to a generic molten glue collection tank or to other applicator devices.

According to an embodiment not illustrated, the fusing device 1 can be mounted on the arm of an anthropomorphic robot and designed to dispense a strip of glue, for example to glue a wing to the bodywork of an automobile. The fusing device 1 can be advantageously equipped with a closing valve 12 which closes and opens the dispensing nozzle 11 and is actuated, for example, by a pneumatic or hydraulic cylinder 14.

The closing valve 12 prevents outside air and humidity from entering into the nozzle, deteriorating the polymeric resin, allowing it to be kept in the fusing device 1 for longer.

For example, if it is a polyurethane resin, thanks to the valve 12 it can be kept in the fusing device 1 for much longer than the 72 hours usually recommended by the manufacturers without the humidity in the atmosphere deteriorating it, making it crystallize.

The fusing device 1 advantageously comprises:
- a first supply conduit designed for containing and guiding towards the melting cell 3 glues or other polymeric resins in a first size;
- a second supply conduit designed for containing and guiding towards the melting cell 3 glues or other polymeric resins in a second size substantially smaller than the first grain size.

This first size can be, or example, blocks, briquettes, small cylinders, spheres or other balls having maximum linear dimensions equal to or greater than 3 centimetres or 5-6 centimetres.

For example, the first supply conduit can be designed to be passed through by cylindrical blocks with a diameter of 6-8 centimetres and a length of 5-10 centimetres.

The second size can be, for example, granules, straws, powder, flakes, spheres or balls having maximum linear dimensions equal to or less than 5 millimetres.

As shown in the embodiment of Figure 3, the first supply conduit can comprise the tube 13 and the duct 15, supplied by the tube 13.

The duct 15 can also be made from a stretch of pipe.

The second supply conduit can comprise the hopper 17.

The hopper 17 is advantageously closed above by the filling hatch 170.

Advantageously, the hopper 17 is closed below by the discharge hatch 172. Advantageously, the first and second supply conduits are simultaneously present in the fusing device 1.

Advantageously, the first and second supply conduits and the hopper 17 are made of sheet metal or other materials which are relatively rigid and they are secured rigidly and moved as one with the rest of the fusing device 1 during normal use.

For this purpose, as shown for example in Figure 3 the first and second supply conduits can comprise two respective upstream portions designed to supply - at least theoretically - in parallel the melting cell.

Preferably, these two upstream portions join together upstream of the melting cell 3, again as show, for example, in Figure 3.

With this aim the duct 15 is provided with a side opening 19 communicating with the hopper 17 and/or more in general with the second supply conduit. The side opening 19 can be made, for example, on a side of the pipe which forms the conduit 15.

The fusing device 1 is equipped with an actuator 21, such as, for example, a piston or another pressing device actuated by a pneumatic or hydraulic cylinder, to press and force the polymeric resin to be melted in the first and/or in the second supply conduit.

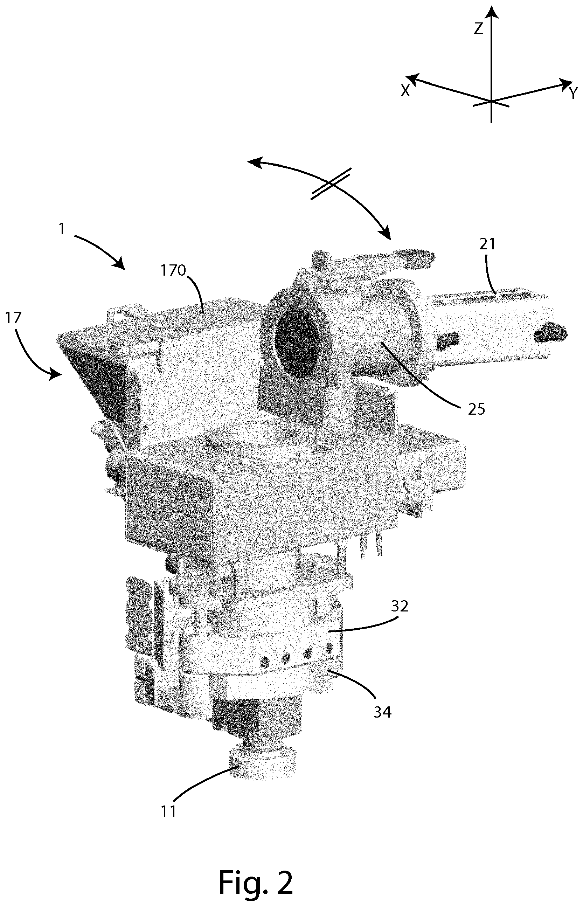

Advantageously, at least the first supply conduit has an axis which is substantially rectilinear and coaxial with the axis ACF of the melting duct 5. As shown in Figure 2, an upstream portion of the first supply conduit forms a cap 25 hinged or in any case fixed to the rest of the fusing device 1 in such a way as to rotate to introduce the polymeric resin in blocks or other first size in the first supply conduit.

The cap 25 of the first supply conduit is fixed in such a way as to be able to rotate, for example, by approximately 90° with respect to the rest of the fusing device 1.

Advantageously, the fusing device 1 is used and positioned for the cleaning, positioning it in such a way that the axis ACF of the melting duct is in a substantially vertical position or in any case extends in an up-down direction: during normal operation this orientation favours in general the flow of the glue towards downstream and towards the nozzle 11, during the cleaning operations it allows the operator to see from above and from a same angle the various components of the melting cell 3 open, for example the casing pieces 30, 32, 34, thus operating in a more convenient manner.

Some examples of operation and use of the fusing device 1 are described below.

Advantageously, the fusing device 1 is used by positioning it in such a way that the axis ACF of the melting duct is in a substantially vertical position or in any case extends in an up-down direction.

An operator can open the first supply conduit by rotating the cap 25 (Figure 2), introduce one or more substantially cylindrical blocks of glue in the first supply conduit and re-close it by lifting and straightening the cap 25, returning it to the position of Figure 1.

The heater elements 526 are activated to heat the melting cell 3 and in particular the intermediate 32 and downstream 34 casing pieces.

The pressing device 21 is actuated by pressing downwards - or in any case in a downstream direction - the block or blocks of glue which, after reaching the intermediate casing piece 32 start to melt and pass through the hopper-like portions 522 and the through holes 524.

After coming out from the through holes 524 the molten glue falls by gravity downwards and is collected in the truncated cone shape chamber 54 of the downstream casing piece 34 from where, through the downstream portion 542, it reaches the dispensing nozzle 11.

In order to load the fusing device 1 with glue in granules, these can be introduced in the second supply conduit by opening the filling hatch 170.

The glue in granules falls in the hopper 17 and through the side opening 19 enters in a downstream portion of the first supply conduit and is collected in the portions 50 and 522 of the melting duct, where it is melted, pushed downwards by the pressing device 21.

Therefore, after coming out from the through holes 524 the molten glue falls by gravity downwards and is collected in the truncated cone shape chamber 54 of the downstream casing piece 34 from where, through the downstream portion 542, it reaches the dispensing nozzle 11.

Since the first supply conduit has a substantially rectilinear axis and coaxial with the axis ACF of the melting deduct 5, the pressing device 21 can either push glue in blocks or in granules, a glue which accumulates in both cases in the portion 50 of the melting duct.

Thanks to the relatively simple and robust shape of the hopper-like portions 522 and of the through holes or other downstream conduits 524 the pressing device can push the glue downstream with a greater force, increasing the flow rate of the molten glue dispensed.

In order to clean the fusing device 1 from the remains of melted and re-solidified glue, if this glue were originally in granules, the operator can empty the hopper 17 of any granules which have remained there by opening the discharge hatch 172: the granules of glue fall outside the hatch 172 and can be reused.

In order to clean the melting cell 3 from the remains of melted and re-solidified glue, it is possible to advantageously loosen the two screws or other threaded pins or tie rods 7, 9 preferably leaving them, however, fixed to the plate 23 in such a way as to have them all close and be able to easily clean them without having to support them.

The casing pieces 30, 32, 34 can be extracted and separated from each other simply by rotating them about the screw or other tie bar 7 (Figure 8).

The operator can then remove the upstream casing piece 30 by hand from the intermediate casing piece 32 and remove, again by hand, the rest of the solidified glue left attached to the walls of the melting duct 50.

In this way, thanks to the cone shape of the hopper-like portions 522 the operator is able to almost always extract even most if not all the glue which had re-solidified in the portions 522, without having to flow into the fusing device 1 the cleaning substances of known type.

The substantial shape, that is, with a narrow section in a more or less intermediate position, that is to say, with a slight "hourglass" type shape, or cylindrical or with a single taper of the portion 50 and cone-shaped of the portions 522 considerably facilitates the removal from the melting duct 5 of the remnants of a block of only partially molten glue and re-solidified.

Thanks to the small section of the conduits 524, the operator can easily pull off the remnants of solidified glue inside them by rotating, again about the screw 7, the intermediate casing piece 32 with respect to the downstream casing piece 34.

The cleaning of the melting cell 3 is also facilitated by the possibility to dismantle the casing piece 34 immediately downstream of the casing piece 32 on which is made the melting grille formed by the ducts 522, 524 and by the heater elements 526.

By using a simple spatula, chisel, flat-headed screwdriver, scraper or other manual tool, preferably non-metallic, the glue solidified inside the truncated cone portion 540 and the underlying cylindrical portion 542 can be removed. The absence of undercuts in the portions 52, 54 and possibly 50 of the melting duct as well as the possibility of always having the casing pieces 32, 34 open in a fan-like fashion whilst still fixed to the screw 7 and to the rest of the fusing device 1 considerably facilitates the removal of the remnants of glue.

The fusing device 1 can therefore be easily dismantled, emptied manually and completely of the remnants of glue solidified inside it and removed empty, without, therefore, having to carry out washing cycles with the melting of new glue or with cleaning substances before being operational again, with a consequent cost saving.

This allows the inside of the fusing device 1 to be cleaned completely of glue on, for example, Friday at the end of the last operational shift, leaving the melting device empty, for the entire weekend or even for a longer holiday period, and having the melting device clean and ready for use on the next Monday morning, without the glue dripping inside for the long period of inactivity, deteriorating and having to then be removed before starting the next operational shift.

Moreover, the fusing device 1 described above can be dismantled, cleaned by hand and reassembled very quickly, in approximately 7-10 minutes.

The fusing device 1 described above can be made very small and lightweight, and it is therefore suitable to be mounted on the arms of robots or other mechanical movement devices.

The embodiments described above can be modified and adapted in several ways without thereby departing from the scope of the inventive concept.

For example, a fusing device 1 can be clearly designed for melting not only polyurethane glue but also glues with a different composition, for example ethylene-vinyl acetate (EVA) type glues.

Each reference in this description to an "embodiment", "an example embodiment" means that a particular characteristic or structure described with regard to that embodiment is included in at least one embodiment of the invention and specifically in a particular variant of the invention, as defined in a main claim.

The fact that these expressions appear in various parts of the description does not imply that they are necessarily referred only to the same embodiment.

Moreover, when a characteristic, element or structure is described in relation to a particular embodiment, it should be noted that it falls within the skills the average technician to apply the characteristic, element or structure to other embodiments.

Numerical references which differ only in terms of different superscripts, e.g. 21', 21", 21‴, indicate, unless specified otherwise, different variants of an element named in the same way.

Moreover, all details of the invention may be substituted by technically equivalent elements.

For example, any materials and dimensions may be used, depending on the technical requirements.

It should be understood that an expression of the type "A *comprises* B, C, D" or "A *is formed by* B, C, D" also comprises and describes the particular case in which "A *consists of* B*,* C, D".

The expression *"A comprises an element B"* is to be understood as 'A *comprises one or more elements B*" unless otherwise specified.

The examples and lists of possible variants of the invention are to understood as non-exhaustive lists.

## Claims

1. A fusing device (1) comprising a melting cell (3), arranged for melting polymeric resins to be treated, such as for example glues; a first supply conduit arranged to contain and guide towards said melting cell (3) said polymeric resin with a first size, for example a polymeric resin in small pieces, tiles or cylinders; a second supply conduit arranged to contain and guide towards said melting cell (3) said polymeric resins with a second size, which is substantially smaller than said first size, for example a granular polymeric resin; and an actuator (21), such as, for example, a piston or another pressing device actuated by a pneumatic or hydraulic cylinder, to press and force the polymeric resin to be melted in the first and/or in the second supply conduit; said melting cell (3) comprising a plurality of casing pieces (30, 32, 34) which together form a melting duct (5) which defines a central longitudinal axis (ACF) and along which the polymeric resin to be treated is melted, wherein each casing piece (30, 32, 34) forms a portion of the inner walls of said melting duct (5); wherein the fusing device (1) is equipped with a fastening system designed to allow the reversible disassembly and reassembly of the melting duct (5), by separating and re-joining together two or more of the casing pieces (30, 32, 34) rotating them about an axis of rotation (ARB1) substantially parallel or transversal to said central longitudinal axis (ACF); said fastening system thereby allowing the separation, cleaning and reassembly together of the two or more casing pieces (30, 32, 34) while keeping them always fixed to each other and to the rest of the fusing device (1); wherein one first casing piece (32) is provided with one or more thermo-electric resistors or other heating elements (526), which are arranged for heating said melting cell (3) and for melting the polymeric resin inside a first portion (52) of said melting duct (5); said first casing piece (32) being configured to rotate about said axis of rotation (ARB1) with respect to one second casing piece (34) placed downstream of the first casing piece (32) to allow the separation, cleaning and reassembly together of the first and second casing pieces (32, 34) while keeping them always fixed to each other and to the rest of the fusing device (1), said second casing piece (34) defining a second portion (54) of the melting duct (5) with a conical or truncated conical shape (540), and said first casing piece (32) having hopper-like portions (522), internally shaped as a cone, which end downstream in through holes (524) having a smaller through section.

2. The fusing device according to claim 1, wherein said first and second casing pieces (32, 34) are delimited by respective coupling surfaces (3000, 3200, 3202, 3400) and said first and second casing pieces (32, 34) are merged together at said coupling surfaces (3000, 3200, 3202, 3400) when said melting cell (3) is mounted, and said coupling surfaces (3000, 3200, 3202, 3400) cross said melting duct (5) according to a direction which is perpendicular and/or transverse with respect to the axis of said melting duct (5).

3. The fusing device according to claim 1, wherein said first and second casing pieces (32, 34) are delimited by respective coupling surfaces (3000, 3200, 3202, 3400) and said first and second casing pieces (32, 34) are merged together at said coupling surfaces (3000, 3200, 3202, 3400) when the melting cell (3) is mounted, and said coupling surfaces (3000, 3200, 3202, 3400) cross said melting duct (5) according to a direction which is parallel to and/or longitudinal to the axis of said melting duct (5).

4. The fusing device according to one or more of the previous claims, wherein the inner walls of said melting duct (5) are substantially fixed together and with respect to the fusing device (1).

5. Method for using a fusing device (1) comprising the following steps:
- providing a fusing device (1) having the features according to one or more of the previous claims, wherein said melting duct (5) extends along a central longitudinal axis (ACF);
- placing said central longitudinal axis (ACF) along a vertical position along which said melting duct (5) extends;
- heating said melting cell (3) so that said cell (3) is able to deliver a stream of molten synthetic resin.

6. The method according to claim 5, wherein said fusing device comprises a fastening system arranged to allow said melting duct (5) to be disassembled and reassembled, by separating and joining together said plurality of casing pieces (30, 32, 34) by means of one or more of the following steps:
- rotating said plurality of casing pieces (30, 32, 34) around a rotation axis (ARB1) which is substantially parallel or longitudinal to the central longitudinal axis (ACF) of said portion of the melting duct (5) formed by said plurality of casing pieces (30, 32, 34) when the melting cell (3) is mounted;
- rotating said plurality of casing pieces (30, 32, 34) around a rotation axis which is substantially perpendicular or transverse to the central longitudinal axis (ACF) of said portion of the melting duct (5) formed by said plurality of casing pieces (30, 32, 34) when the melting cell (3) is mounted;
- translating said plurality of casing pieces (30, 32, 34) along an axis of rotation (ARB1) which is substantially parallel or longitudinal to the central longitudinal axis (ACF) of said portion of the melting duct (5) formed by said plurality of casing pieces (30, 32, 34) when the melting cell (3) is mounted;
- translating said plurality of casing pieces (30, 32, 34) along an axis which is substantially perpendicular or transverse to the central longitudinal axis (ACF) of said portion of the melting duct (5) formed by said plurality of casing pieces (30, 32, 34) when the melting cell (3) is mounted.

7. The method according to claim 5, wherein said fusing device is arranged to allow said melting duct (5) to be disassembled and reassembled, by separating and joining together said plurality of casing pieces (30, 32, 34) by means of one or more of the following steps:
- translating said plurality of casing pieces (30, 32, 34) along an axis of rotation (ARB1) which is substantially parallel or longitudinal to the central longitudinal axis (ACF) of said portion of the melting duct (5) formed by said plurality of casing pieces (30, 32, 34) when the melting cell (3) is mounted;
- translating said plurality of casing pieces (30, 32, 34) along an axis which is substantially perpendicular or transversal to the axis of said portion of the melting duct (5) formed by said plurality of casing pieces (30, 32, 34) when the melting cell (3) is mounted.

8. The method according to claim 5, wherein when the melting cell (3) is mounted, said plurality of casing pieces (30, 32, 34) form a compressed pack, which is packed for example by means of one or more tie rods (7, 9), in a predetermined packing direction, and said fusing device (1) comprises a fastening system arranged to allow the melting duct (5) to be disassembled and reassembled, by separating and joining together said plurality of casing pieces (30, 32, 34) by means of one or more of the following steps:
- rotating said plurality of casing pieces (30, 32, 34) about a axis of rotation (ARB1) which is substantially parallel or longitudinal to said predetermined packing direction;
- rotating said plurality of casing pieces (30, 32, 34) about a rotation axis which is substantially perpendicular or transverse to said predetermined packing direction;
- translating said plurality of casing pieces (30, 32, 34) along an axis which is substantially parallel or longitudinal to said predetermined packing direction;
- translating said plurality of casing pieces (30, 32, 34) along an axis which is substantially perpendicular or transverse to said predetermined packing direction.

## Patentansprüche

1. Schmelzvorrichtung (1), umfassend eine Schmelzzelle (3), die zum Schmelzen von zu behandelnden Polymerharzen, wie zum Beispiel Klebstoffen, angeordnet ist; eine erste Zuführungsleitung, die angeordnet ist, um das Polymerharz mit einer ersten Größe, zum Beispiel ein Polymerharz in kleinen Stücken, Kacheln oder Zylindern, zu enthalten und zu der Schmelzzelle (3) zu führen; eine zweite Zuführungsleitung, die so angeordnet ist, dass sie die Polymerharze mit einer zweiten Größe, die wesentlich kleiner als die erste Größe ist, beispielsweise ein körniges Polymerharz, enthält und zu der Schmelzzelle (3) führt; und einen Aktuator (21), wie beispielsweise einen Kolben oder eine andere Druckvorrichtung, die durch einen pneumatischen oder hydraulischen Zylinder betätigt wird, um das zu schmelzende Polymerharz in der ersten und/oder in der zweiten Zuführungsleitung zu drücken und zu zwingen; wobei die Schmelzzelle (3) eine Vielzahl von Gehäuseteilen (30, 32, 34) umfasst, die zusammen einen Schmelzkanal (5) bilden, der eine zentrale Längsachse (ACF) definiert und entlang dem das zu behandelnde Polymerharz geschmolzen wird, wobei jedes Gehäuseteil (30, 32, 34) einen Teil der Innenwände des Schmelzkanals (5) bildet; wobei die Schmelzvorrichtung (1) mit einem Befestigungssystem ausgestattet ist, das dazu bestimmt ist, die reversible Demontage und Wiedermontage des Schmelzkanals (5) zu ermöglichen, indem zwei oder mehr der Gehäuseteile (30, 32, 34) getrennt und wieder zusammengefügt werden, indem sie um eine Drehachse (ARB1) gedreht werden, die im Wesentlichen parallel oder quer zu der zentralen Längsachse (ACF) verläuft; wobei das Befestigungssystem dadurch die Trennung, die Reinigung und den Wiederzusammenbau der zwei oder mehr Gehäuseteile (30, 32, 34) ermöglicht, während sie immer aneinander und am Rest der Schmelzvorrichtung (1) befestigt bleiben; wobei ein erstes Gehäuseteil (32) mit einem oder mehreren thermoelektrischen Widerständen oder anderen Heizelementen (526) versehen ist, die zum Beheizen der Schmelzzelle (3) und zum Schmelzen des Polymerharzes innerhalb eines ersten Abschnitts (52) des Schmelzkanals (5) angeordnet sind; wobei das erste Gehäusestück (32) so konfiguriert ist, dass es sich um die Drehachse (ARB1) in Bezug auf ein zweites Gehäusestück (34) dreht, das stromabwärts des ersten Gehäusestücks (32) angeordnet ist, um die Trennung, die Reinigung und den Wiederzusammenbau des ersten und des zweiten Gehäusestücks (32, 34) zu ermöglichen, während sie immer aneinander und am Rest der Schmelzvorrichtung (1) befestigt bleiben, wobei das zweite Gehäusestück (34) einen zweiten Abschnitt (54) des Schmelzkanals (5) mit einer konischen oder kegelstumpfförmigen Form (540) definiert und das erste Gehäusestück (32) trichterartige Abschnitte (522) aufweist, die im Inneren als Kegel geformt sind und stromabwärts in Durchgangslöchern (524) mit einem kleineren Durchgangsquerschnitt enden.

2. Schmelzvorrichtung nach Anspruch 1, wobei das erste und das zweite Gehäuseteil (32, 34) durch entsprechende Kopplungsflächen (3000, 3200, 3202, 3400) begrenzt sind und das erste und das zweite Gehäuseteil (32, 34) an den Kopplungsflächen (3000, 3200, 3202, 3400) zusammengeführt werden, wenn die Schmelzzelle (3) montiert ist, und die Verbindungsflächen (3000, 3200, 3202, 3400) den Schmelzkanal (5) in einer Richtung kreuzen, die senkrecht und/oder quer zur Achse des Schmelzkanals (5) verläuft.

3. Schmelzvorrichtung nach Anspruch 1, wobei das erste und das zweite Gehäuseteil (32, 34) durch entsprechende Kopplungsflächen (3000, 3200, 3202, 3400) begrenzt sind und das erste und das zweite Gehäuseteil (32, 34) an den Kopplungsflächen (3000, 3200, 3202, 3400) zusammengeführt werden, wenn die Schmelzzelle (3) montiert ist, und die Verbindungsflächen (3000, 3200, 3202, 3400) den Schmelzkanal (5) in einer Richtung kreuzen, die parallel und/oder längs zur Achse des Schmelzkanals (5) verläuft.

4. Schmelzvorrichtung nach einem oder mehreren der vorhergehenden Ansprüche, wobei die Innenwände des Schmelzkanals (5) im Wesentlichen miteinander und mit Bezug auf die Schmelzvorrichtung (1) befestigt sind.

5. Verfahren zur Verwendung einer Schmelzvorrichtung (1) mit den folgenden Schritten:
- Bereitstellen einer Schmelzvorrichtung (1) mit den Merkmalen gemäß einem oder mehreren der vorhergehenden Ansprüche, wobei sich der Schmelzkanal (5) entlang einer zentralen Längsachse (ACF) erstreckt;
- Anordnen der zentralen Längsachse (ACF) entlang einer vertikalen Position, entlang der sich der Schmelzkanal (5) erstreckt;
- Erhitzen der Schmelzzelle (3), so dass die Zelle (3) in der Lage ist, einen Strom von geschmolzenem Kunstharz abzugeben.

6. Verfahren nach Anspruch 5, wobei die Schmelzvorrichtung ein Befestigungssystem umfasst, das so angeordnet ist, dass der Schmelzkanal (5) zerlegt und wieder zusammengebaut werden kann, indem die Vielzahl von Gehäuseteilen (30, 32, 34) durch einen oder mehrere der folgenden Schritte getrennt und zusammengefügt werden:
- Drehen der Vielzahl von Gehäuseteilen (30, 32, 34) um eine Drehachse (ARB1), die im Wesentlichen parallel oder in Längsrichtung zu der zentralen Längsachse (ACF) des Abschnitts des Schmelzkanals (5) verläuft, der durch die Vielzahl von Gehäuseteilen (30, 32, 34) gebildet wird, wenn die Schmelzzelle (3) montiert ist;
- Drehen der Vielzahl von Gehäuseteilen (30, 32, 34) um eine Drehachse, die im Wesentlichen senkrecht oder quer zur zentralen Längsachse (ACF) des durch die Vielzahl von Gehäuseteilen (30, 32, 34) gebildeten Abschnitts des Schmelzkanals (5) verläuft, wenn die Schmelzzelle (3) montiert ist;
- Verschieben der Vielzahl von Gehäuseteilen (30, 32, 34) entlang einer Drehachse (ARB1), die im Wesentlichen parallel oder in Längsrichtung zur zentralen Längsachse (ACF) des durch die Vielzahl von Gehäuseteilen (30, 32, 34) gebildeten Abschnitts des Schmelzkanals (5) verläuft, wenn die Schmelzzelle (3) montiert ist;
- Verschieben der Vielzahl von Gehäuseteilen (30, 32, 34) entlang einer Achse, die im Wesentlichen senkrecht oder quer zu der zentralen Längsachse (ACF) des durch die Vielzahl von Gehäuseteilen (30, 32, 34) gebildeten Abschnitts des Schmelzkanals (5) verläuft, wenn die Schmelzzelle (3) montiert ist.

7. Verfahren nach Anspruch 5, wobei die Schmelzvorrichtung so angeordnet ist, dass der Schmelzkanal (5) durch Trennen und Zusammenfügen der Vielzahl von Gehäuseteilen (30, 32, 34) mittels eines oder mehrerer der folgenden Schritte zerlegt und wieder zusammengesetzt werden kann:
- Verschieben der Vielzahl von Gehäuseteilen (30, 32, 34) entlang einer Drehachse (ARB1), die im Wesentlichen parallel oder in Längsrichtung zur zentralen Längsachse (ACF) des Abschnitts des Schmelzkanals (5) verläuft, der durch die Vielzahl von Gehäuseteilen (30, 32, 34) gebildet wird, wenn die Schmelzzelle (3) montiert ist;
- Verschieben der Vielzahl von Gehäuseteilen (30, 32, 34) entlang einer Achse, die im Wesentlichen senkrecht oder quer zur Achse des durch die Vielzahl von Gehäuseteilen (30, 32, 34) gebildeten Abschnitts des Schmelzkanals (5) verläuft, wenn die Schmelzzelle (3) montiert ist.

8. Verfahren nach Anspruch 5, bei dem, wenn die Schmelzzelle (3) montiert ist, die Vielzahl von Gehäuseteilen (30, 32, 34) ein komprimiertes Paket bilden, das beispielsweise mittels einer oder mehrerer Zugstangen (7, 9) in einer vorbestimmten Packungsrichtung gepackt ist, und die Schmelzvorrichtung (1) ein Befestigungssystem umfasst, das so angeordnet ist, dass der Schmelzkanal (5) durch Trennen und Zusammenfügen der Vielzahl von Gehäuseteilen (30, 32, 34) mittels eines oder mehrerer der folgenden Schritte demontiert und wieder zusammengesetzt werden kann:
- Drehen der Vielzahl von Gehäuseteilen (30, 32, 34) um eine Drehachse (ARB1), die im Wesentlichen parallel oder längs zu der vorbestimmten Verpackungsrichtung verläuft;
- Drehen der Vielzahl von Gehäuseteilen (30, 32, 34) um eine Drehachse, die im Wesentlichen senkrecht oder quer zu der vorbestimmten Packungsrichtung verläuft;
- Verschieben der Vielzahl von Gehäuseteilen (30, 32, 34) entlang einer Achse, die im Wesentlichen parallel oder längs zu der vorbestimmten Packungsrichtung verläuft;
- Verschieben der Vielzahl von Gehäuseteilen (30, 32, 34) entlang einer Achse, die im Wesentlichen senkrecht oder quer zu der vorbestimmten Packungsrichtung verläuft.

## Revendications

1. Dispositif de fusion (1) comprenant une cellule de fusion (3), conçue pour faire fondre des résines polymères à traiter, par exemple des colles; un premier conduit d'alimentation conçu pour contenir et guider vers ladite cellule de fusion (3) ladite résine polymère d'une première taille, par exemple une résine polymère en petits morceaux, en carreaux ou en cylindres; un second conduit d'alimentation conçu pour contenir et guider vers ladite cellule de fusion (3) lesdites résines polymères d'une seconde taille, qui est sensiblement plus petite que ladite première taille, par exemple une résine polymère granulaire; et un actionneur (21), tel que, par exemple, un piston ou un autre dispositif de pression actionné par un cylindre pneumatique ou hydraulique, pour presser et forcer la résine polymère à être fondue dans le premier et/ou dans le second conduit d'alimentation; ladite cellule de fusion (3) comprend une pluralité de pièces d'enveloppe (30, 32, 34) qui forment ensemble un conduit de fusion (5) définissant un axe longitudinal central (ACF) le long duquel la résine polymère à traiter est fondue, chaque pièce d'enveloppe (30, 32, 34) formant une partie des parois intérieures dudit conduit de fusion (5); dans lequel le dispositif de fusion (1) est équipé d'un système de fixation conçu pour permettre le démontage et le remontage réversibles du conduit de fusion (5), en séparant et en réassemblant deux ou plusieurs des pièces d'enveloppe (30, 32, 34) en les faisant tourner autour d'un axe de rotation (ARB1) sensiblement parallèle ou transversal audit axe longitudinal central (ACF); ledit système de fixation permet ainsi la séparation, le nettoyage et le réassemblage des deux ou plusieurs pièces de boîtier (30, 32, 34) tout en les maintenant toujours fixées l'une à l'autre et au reste du dispositif de fusion (1); dans lequel une première pièce de boîtier (32) est pourvue d'une ou plusieurs résistances thermoélectriques ou d'autres éléments chauffants (526), qui sont disposés pour chauffer ladite cellule de fusion (3) et pour faire fondre la résine polymère à l'intérieur d'une première partie (52) dudit conduit de fusion (5); ladite première pièce d'enveloppe (32) étant configurée pour tourner autour dudit axe de rotation (ARB1) par rapport à une seconde pièce d'enveloppe (34) placée en aval de la première pièce d'enveloppe (32) pour permettre la séparation, le nettoyage et le remontage ensemble des première et seconde pièces d'enveloppe (32, 34) tout en les gardant toujours fixées l'une à l'autre et au reste du dispositif de fusion (1), ladite deuxième pièce d'enveloppe (34) définissant une deuxième partie (54) du conduit de fusion (5) de forme conique ou tronconique (540), et ladite première pièce d'enveloppe (32) présentant des parties en forme de trémie (522), de forme interne conique, qui se terminent en aval par des trous de passage (524) ayant une section de passage plus petite.

2. Dispositif de fusion selon la revendication 1, dans lequel lesdites première et deuxième pièces de boîtier (32, 34) sont délimitées par des surfaces d'accouplement respectives (3000, 3200, 3202, 3400) et lesdites première et deuxième pièces de boîtier (32, 34) sont fusionnées au niveau desdites surfaces d'accouplement (3000, 3200, 3202, 3400) lorsque ladite cellule de fusion (3) est montée, et lesdites surfaces d'accouplement (3000, 3200, 3202, 3400) traversent ledit conduit de fusion (5) selon une direction perpendiculaire et/ou transversale par rapport à l'axe dudit conduit de fusion (5).

3. Dispositif de fusion selon la revendication 1, dans lequel lesdites première et deuxième pièces d'enveloppe (32, 34) sont délimitées par des surfaces d'accouplement respectives (3000, 3200, 3202, 3400) et lesdites première et deuxième pièces d'enveloppe (32, 34) sont réunies au niveau desdites surfaces d'accouplement (3000, 3200, 3202, 3400) lorsque la cellule de fusion (3) est montée, et lesdites surfaces d'accouplement (3000, 3200, 3202, 3400) traversent ledit conduit de fusion (5) selon une direction parallèle et/ou longitudinale à l'axe dudit conduit de fusion (5).

4. Dispositif de fusion selon l'une ou plusieurs des revendications précédentes, dans lequel les parois intérieures dudit conduit de fusion (5) sont sensiblement fixes entre elles et par rapport au dispositif de fusion (1) .

5. Procédé d'utilisation d'un dispositif de fusion (1) comprenant les étapes suivantes:
- fournir un dispositif de fusion (1) présentant les caractéristiques selon l'une ou plusieurs des revendications précédentes, dans lequel ledit conduit de fusion (5) s'étend le long d'un axe longitudinal central (ACF) ;
- placer ledit axe longitudinal central (ACF) le long d'une position verticale le long de laquelle s'étend ledit conduit de fusion (5);
- chauffer ladite cellule de fusion (3) de manière à ce que ladite cellule (3) puisse délivrer un flux de résine synthétique fondue.

6. Procédé selon la revendication 5, dans lequel ledit dispositif de fusion comprend un système de fixation agencé pour permettre le démontage et le remontage dudit conduit de fusion (5), en séparant et en assemblant ladite pluralité de pièces d'enveloppe (30, 32, 34) au moyen d'une ou de plusieurs des étapes suivantes:
- rotation de ladite pluralité de pièces d'enveloppe (30, 32, 34) autour d'un axe de rotation (ARB1) qui est sensiblement parallèle ou longitudinal à l'axe longitudinal central (ACF) de ladite partie du conduit de fusion (5) formée par ladite pluralité de pièces d'enveloppe (30, 32, 34) lorsque la cellule de fusion (3) est montée;
- faire tourner ladite pluralité de pièces d'enveloppe (30, 32, 34) autour d'un axe de rotation qui est sensiblement perpendiculaire ou transversal à l'axe longitudinal central (ACF) de ladite partie du conduit de fusion (5) formée par ladite pluralité de pièces d'enveloppe (30, 32, 34) lorsque la cellule de fusion (3) est montée;
- la translation de ladite pluralité de pièces d'enveloppe (30, 32, 34) le long d'un axe de rotation (ARB1) qui est sensiblement parallèle ou longitudinal à l'axe longitudinal central (ACF) de ladite partie du conduit de fusion (5) formée par ladite pluralité de pièces d'enveloppe (30, 32, 34) lorsque la cellule de fusion (3) est montée;
- la translation de ladite pluralité de pièces d'enveloppe (30, 32, 34) le long d'un axe sensiblement perpendiculaire ou transversal à l'axe longitudinal central (ACF) de ladite partie du conduit de fusion (5) formée par ladite pluralité de pièces d'enveloppe (30, 32, 34) lorsque la cellule de fusion (3) est montée.

7. Procédé selon la revendication 5, dans lequel ledit dispositif de fusion est conçu pour permettre le démontage et le remontage dudit conduit de fusion (5), en séparant et en assemblant ladite pluralité de pièces d'enveloppe (30, 32, 34) au moyen d'une ou de plusieurs des étapes suivantes:
- translation de ladite pluralité de pièces d'enveloppe (30, 32, 34) le long d'un axe de rotation (ARB1) qui est sensiblement parallèle ou longitudinal à l'axe longitudinal central (ACF) de ladite partie du conduit de fusion (5) formée par ladite pluralité de pièces d'enveloppe (30, 32, 34) lorsque la cellule de fusion (3) est montée;
- la translation de ladite pluralité de pièces d'enveloppe (30, 32, 34) le long d'un axe qui est sensiblement perpendiculaire ou transversal à l'axe de ladite partie du conduit de fusion (5) formée par ladite pluralité de pièces d'enveloppe (30, 32, 34) lorsque la cellule de fusion (3) est montée.

8. Procédé selon la revendication 5, dans lequel, lorsque la cellule de fusion (3) est montée, ladite pluralité de pièces d'enveloppe (30, 32, 34) forme un paquet comprimé, qui est emballé par exemple au moyen d'un ou plusieurs tirants (7, 9), dans une direction d'emballage prédéterminée, et ledit dispositif de fusion (1) comprend un système de fixation agencé pour permettre le démontage et le remontage du conduit de fusion (5), par la séparation et l'assemblage de ladite pluralité de pièces d'enveloppe (30, 32, 34) au moyen d'une ou de plusieurs des étapes suivantes:
- rotation de ladite pluralité de pièces d'enveloppe (30, 32, 34) autour d'un axe de rotation (ARB1) qui est sensiblement parallèle ou longitudinal à ladite direction d'emballage prédéterminée;
- faire tourner ladite pluralité de pièces d'enveloppe (30, 32, 34) autour d'un axe de rotation qui est sensiblement perpendiculaire ou transversal à ladite direction d'emballage prédéterminée;
- la translation de ladite pluralité de pièces d'enveloppe (30, 32, 34) le long d'un axe qui est sensiblement parallèle ou longitudinal à ladite direction d'emballage prédéterminée;
- translation de ladite pluralité de pièces d'enveloppe (30, 32, 34) le long d'un axe qui est substantiellement perpendiculaire ou transversal à ladite direction d'emballage prédéterminée.
